# EUROPEAN PATENT SPECIFICATION

(11) **EP 2 549 315 B1**
(45) Date of publication and mention of the grant of the patent: **27.07.2016**
(21) Application number: 12151987.0
(22) Date of filing: 20.01.2012
(51) Int. Cl.: G02B 6/38, B29D 11/00, G02B 6/255

(54) **Method, device and kit of parts for attaching an optical fiber in an optical fiber connector**
Verfahren, Vorrichtung und Montagesatz zur Befestigung einer Glasfaser in einem Glasfaserstecker
Procédé, dispositif et ensemble de pièces pour fixer une fibre optique dans un connecteur à fibre optique

(30) Priority: 18.07.2011 EP 11174376
(43) Date of publication of application: 23.01.2013
(73) Proprietor: Tyco Electronics Raychem BVBA, 3010 Kessel-Lo (BE)
(72) Inventor: Verheyden, Danny Willy August, B-3200 Gelrode (BE); Mattheus, Walter, B-3018 Wijgmaal (BE)
(74) Representative: Patentanwälte Bressel und Partner mbB

(56) References cited:
- WO-A1-2011/065397
- US-A- 5 283 849
- US-A1- 2003 159 471

## Description

### TECHNICAL FIELD

The present invention relates to a method for attaching an optical fiber in an optical fiber connector, to a corresponding connector, and to a kit of parts used for such an attachment.

### BACKGROUND

Modern optical devices and optical communications systems widely use fiber optic cables. Optical fibers are strands of glass fiber processed so that light beams transmitted through the glass fiber are subject to total internal reflection so that a large fraction of the incident intensity of light directed into the fiber is received at the other end of the fiber.

An optical fiber connector terminates the end of an optical fiber, and enables connection and disconnection, usually to another optical fiber.

Optical fibers usually have one or more coatings, for example a polymer coating made of acrylate or polyimide, to protect the surface of the fiber. To attach a connector to an optical fiber, normally the coating or coatings at an end of the optical fiber are removed, so that a bare end of the optical fiber is obtained; this operation is known as stripping. A stripped optical fiber can then be connected, e.g. by means of a so called ferruled connector. In a ferruled connector, the stripped fiber is positioned coaxially in a ferrule. Ferrules can be made of ceramic, metal or sometimes plastic, and have a drilled center hole, wherein the bare optical fiber end is positioned and attached, usually by means of an adhesive. Alternatively, ferrule-less connectors may be used. The optical fiber may then be attached mechanically, e.g. by using a wedge, to a part of the connector. Alternatively, an adhesive may be used.

An important issue in connecting optical fibers is avoiding possible contamination. Optical fiber connections are highly susceptible to contamination by moisture, dust, dirt and other atmospheric borne contaminants. Contamination from particles of dust and dirt will disadvantageously decrease the effectiveness of the optical connection and thus of the entire optical circuit. Therefore, it is important to avoid contamination when attaching an optical fiber to or in an optical fiber connector.

The US-A-5,208,887 and the US-A-2010/209052 disclose a method for attaching an optical fiber to an optical fiber connector, said optical fiber connector comprising a fiber attachment element and a connector body. The method comprising the steps of attaching the optical fiber to said fiber attachment element in an attachment position provided outside of said connector body and moving said fiber attachment element to a functional position provided inside said connector body after said attaching step.

The US 2003/159471 describes a method for fabricating fiber optic joints using a split glass tube, glue and a heat shrink tube.

A need still exists for an improved method for attaching an optical fiber ion optical fiber connector.

### SUMMARY OF THE INVENTION

An object of the present invention is to provide an alternative method for attaching an optical fiber in an optical fiber connector, a corresponding alternative connector, and an alternative kit of parts used for such an attachment.

The technical problem is soved by a method with the steps of claim 1, a kit of parts with the features of claim 5 and an optical fiber connector with the features of claim 9. Preferred embodiments are mentioned in the dependent claims.

An advantage of embodiments of the present invention can be to reduce or eliminate one or more deficiencies and problems associated with the prior art devices and methods. Embodiments of the herein disclosed devices and methods for attaching an optical fiber in an optical fiber connector can be any of reliable, convenient, contamination avoiding and inexpensive. Moreover, IPA or other alcohols need not be used to clean the fiber prior to heat activation. In some embodiments of the present invention, the position of the bare optical fiber, i.e. of the core and the cladding (see below under the "definitions" for the meaning of the core and of the cladding), is fixed with respect to the connector; this is called fiber fixation. "Fiber fixation" is not the same as "fiber termination"; in fiber termination the optical fiber is simply attached to the connector, e.g. by attaching the outside of the coating to the connector housing; in that case, the glass part of the optical fiber, i.e. the cladding and the core, can still move, and is not fixed, with respect to the connector.

Embodiments disclosed herein can utilize a dimensionally recoverable element to assist in optical fiber retention. A dimensionally recoverable element is an element of which the dimensional configuration may be made to change substantially when subjected to heat treatment. Usually these elements recover towards an original shape from which they have previously been deformed, but the term "recoverable" as used herein, also includes an element which adopts a new configuration even if it has not been previously deformed. In embodiments of the present invention heat recoverable elements recover towards an original shape in an encapsulating and retaining form, in particular in an optical fiber retaining form.

An advantage of some embodiments of the invention is that fiber grow out is prevented. Fiber grow out is caused by the shrinking behavior of polymer jackets, i.e. the outer coating of optical fibers. Due to temperature differences (requirements for optical fibers are stability between -40°C and 70°C) fiber polymer jackets may shrink back, causing the core and the cladding, and usually also the inner coating (which may be an acrylic layer), to grow out of the polymer jacket.

In certain embodiments, the heat-recoverable element is a sleeve (e.g., a tube) that can include a longitudinal seam or can be seamless. In certain embodiments, the sleeve has a dual wall construction including an outer, heat recoverable annular layer, and an inner annular adhesive layer. In certain embodiments, the inner annular adhesive layer includes a hot-melt adhesive layer.

Preferably, the adhesive provides for primary retention of the optical fiber within a connector. The heat recoverable sheath functions to contain the adhesive and to cause the adhesive to flow into void areas between the fiber attachment element and the optical fiber to ensure that effective adhesive contact is made with the bare glass portion of the optical fiber, the coated portion of the optical fiber and the fiber attachment element. A relatively large amount of adhesive is used. For example, the process uses a heat shrink tube having an outer wall (i.e., layer) of heat recoverable material and in inner wall (i.e., layer) of adhesive in combination with a separate sleeve of adhesive that fits inside the inner wall to provide more adhesive for filling voids. Alternatively, the inner wall can be made thicker to provide the additional volume of adhesive.

In one embodiment, the sleeve is initially expanded from a normal, dimensionally stable diameter to a dimensionally heat unstable diameter that is larger than the normal diameter. The sleeve is shape-set to the dimensionally heat unstable diameter. This typically occurs in a factory/manufacturing setting. The dimensionally heat unstable diameter is sized to allow the sleeve to be inserted over two components desired to be coupled together. After insertion over the two components, the sleeve is heated thereby causing the sleeve to shrink back toward the normal diameter such that the sleeve radially compresses against the two components to secure the two components together. The adhesive layer is preferably heat activated during heating of the sleeve. In certain embodiments, the sleeve can be used to secure a coated optical fiber to a substrate such as an attachment member adapted to be secured within a connector body. In certain embodiments, the adhesive within the sleeve can bond directly to the substrate and the coated optical fiber, and the coated optical fiber can have a diameter of less than 300 µm. In certain embodiments, a bare glass portion of the coated fiber extends outwardly axially beyond an end of the sleeve. In certain embodiments, the sleeve can be used to anchor/axially fix a coating portion of an optical fiber to a bare glass portion of the optical fiber. In certain embodiments, the adhesive within the sleeve can bond directly to the coating portion and the bare glass portion of the optical fiber, and the bare glass portion of the optical fiber can extend outwardly axially beyond an end of the sleeve. The coating porting can have a diameter less than 300 µm.

An advantageous effect of the present invention is that even if there would be contamination present between the fiber and the heat-recoverable element, such as dust and dirt particles, the attachment of the fiber to the fiber attachment element would still be sufficient resulting in good optical properties. In addition, the present invention prevents modal noise caused by microbends, which are quite often a problem for mechanical crimping systems.

The thermoformable material may be a heat shrink material. The heat shrink material may be a heat shrink tube. It may be a heat shrink tape.

In one embodiment of a method to attach the optical fiber to the fiber attachment element, a thermoformable material such as a heat-recoverable element is used, e.g. a heat shrink material such as a heat shrink tape or, preferably, a heat shrink sleeve or a heat shrink tube. Another preferred method is to use a hot melt material as well as a heat shrink material such as a heat shrink tube. The hot melt material may be on the inner surface of the heat shrink sleeve or tube, and/or as a separate liner of the heat shrink sleeve or tube.

In some embodiments the optical fiber is adhesively affixed to an attachment element that is connected to the connector body. In other embodiments the optical fiber includes a first portion including a primary coating and a second portion not including a primary coating, wherein the unsupported end portion of the optical fiber is formed by the second portion, and wherein the first and second portions are adhesively affixed to the attachment element by an adhesive. Preferably the second portion of the optical fiber includes a signal conveyance structure including a core and a cladding, wherein the first portion of the optical fiber includes the signal conveyance structure covered by the primary and secondary coating, and wherein the adhesive limits axial movement between the signal conveyance structure and the secondary coating.

In alternative embodiments a sleeve covers the adhesive, and preferably the sleeve is a heat recoverable sleeve, and wherein the adhesive is heat activated.

In some embodiments the fiber optic connector has a first configuration wherein the unsupported end portion is enclosed within the connector body to protect an end face of the unsupported end portion from contamination, and a second configuration wherein the end face of the unsupported end portion can be accessed at the interface end of the connector body to allow for optical connection to another optical fiber.

Preferably an adhesive affixes the optical fiber within the connector body, and a sleeve surrounds the adhesive and the optical fiber. More specifically the sleeve can be a heat recoverable sleeve, and the adhesive is preferably heat activated. In some embodiments, the sleeve surrounds an attachment element that is adhesively bonded to the optical fiber.

### Definitions

The term "fiber" as used herein relates to a single optical transmission element having a core having e.g. a diameter in the range from 8 to 10 µm, e.g. a diameter of 8 µm, and a cladding with e.g. a diameter in the range from 124 to 126 µm, e.g. a diameter of 125 µm, wherein the core is the central, light-transmitting region of the fiber, and the cladding is the material surrounding the core to form a guiding structure for light propagation within the core. The dimensions may of course be different; for multimode fibers, a core diameter of 50 µm or of 62.5 µm is most common. The core and cladding can be coated with a primary coating usually comprising one or more organic or polymer layers surrounding the cladding to provide mechanical and environmental protection to the light-transmitting region.

The primary coating may have a diameter ranging e.g. between 200 and 250 µm. The core, cladding and primary coating usually are coated with a secondary coating, a so-called "buffer", a protective polymer layer without optical properties applied over the primary coating. The buffer or secondary coating usually has a diameter ranging between 250-1100 µm, depending on the cable manufacturer.

If the coating layer or layers are removed from a portion of the fiber over a certain length, so that only the core and cladding remain bare, that portion of the fiber is "bare" as this is called in this document.

The term "light" as used herein relates to electromagnetic radiation, which comprises a part of the electromagnetic spectrum that is classified by wavelength into infrared, the visible region, and ultraviolet.

Embodiments disclosed herein can utilize a dimensionally recoverable element to assist in optical fiber retention. A dimensionally recoverable element is an element the dimensional configuration of which may be made to change substantially when subjected to heat treatment. Usually these elements recover towards an original shape from which they have previously been deformed, but the term "recoverable" as used herein, also includes an element which adopts a new configuration even if it has not been previously deformed. In embodiments of the present invention heat recoverable elements recover towards an original shape in an encapsulating and retaining form, in particular in an optical fiber retaining form.

A typical form of a dimensionally recoverable element is a heat-recoverable element, the dimensional configuration of which may be changed by subjecting the element to heat treatment. In their most common form, such elements comprise a heat-shrinkable sleeve made from a polymeric material exhibiting the property of elastic or plastic memory as described, for example, in U.S. Patents Nos. 2,027,962 (Currie); 3,086,242 (Cook et al); and 3,597,372 (Cook). The polymeric material has been cross-linked during the production process so as to enhance the desired dimensional recovery. One method of producing a heat-recoverable element comprises shaping the polymeric material into the desired heat-stable form, subsequently crosslinking the polymeric material, heating the element to a temperature above the crystalline melting point (or, for amorphous materials the softening point of the polymer), deforming the element, and cooling the element while in the deformed state so that the deformed state of the element is retained. In use, because the deformed state of the element is heat-unstable, application of heat will cause the element to assume its original heat-stable shape.

### BRIEF DESCRIPTION OF THE DRAWINGS

Further features of the present invention will become apparent from the drawings, wherein:
Figs. 1a-1c schematically illustrate a connector body comprising a fiber attachment element according to an embodiment of the invention, used with a whole range of coatings for different types of optical fibers.
Fig. 2 illustrates an embodiment of a connector body comprising a fiber attachment element;
Figs. 3a and 3c show cross-sections of an embodiment of a connector body, comprising a first portion of the fiber attachment element before activation of the heat shrink material.
Figs. 3b and 3d show cross-sections of an embodiment of a connector body comprising a second portion of the fiber attachment element before activation of the heat shrink material.
Figs. 4a and 4c show cross-sections of an embodiment of a connector body comprising a first portion of the fiber attachment element after activation of the heat shrink material.
Figs. 4b and 4d show cross-sections of an embodiment of a connector body comprising a second portion of the fiber attachment element after activation of the heat shrink material.
Fig. 5 shows an embodiment of a connector wherein an optical fiber is attached.

### DETAILED DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite element is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features, and a reference numeral appearing in more than one figure refers to the same element.

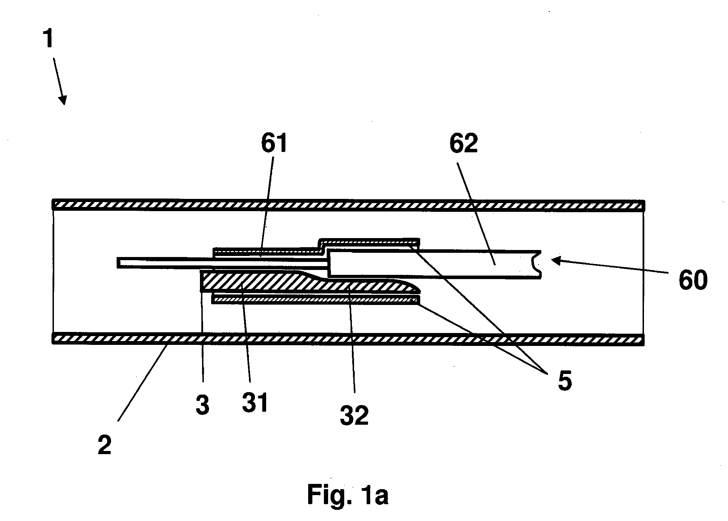

Figs. 1a-1c schematically show a cross-section, along the direction of the longitudinal axis of an optical fiber, of an embodiment in accordance with the invention. An optical connector 1 comprises a connector body 2 and a fiber attachment element 3 that is surrounded by the connector body 2. The connector body 2 has an interface end 70.

An optical fiber 60 is inserted in the connector 1. A heat-recoverable element, which is in the shown embodiment a heat shrink tube 5, surrounds the optical fiber 60 and the fiber attachment element 3. The heat shrink tube 5, when recovered, holds or presses the optical fiber against the fiber attachment element 3, and thus retains the optical fiber 60 to the fiber attachment element 3. The optical fiber 60 has a bare portion 61 and a coating, or coated, i.e. non-stripped portion, 62.

The fiber attachment element 3 preferably has a stepped configuration with a first platform that is offset in height from a second platform by a distance generally equal to a thickness of the secondary coating of the optical fiber. The coated portion of the optical fiber is bonded to the first platform and the bare glass portion of the optical fiber is bonded to the second platform. The first platform can include a channel sized for receiving the coated portion of the optical fiber and the second platform can include a channel sized for receiving the bare fiber portion of the optical fiber.

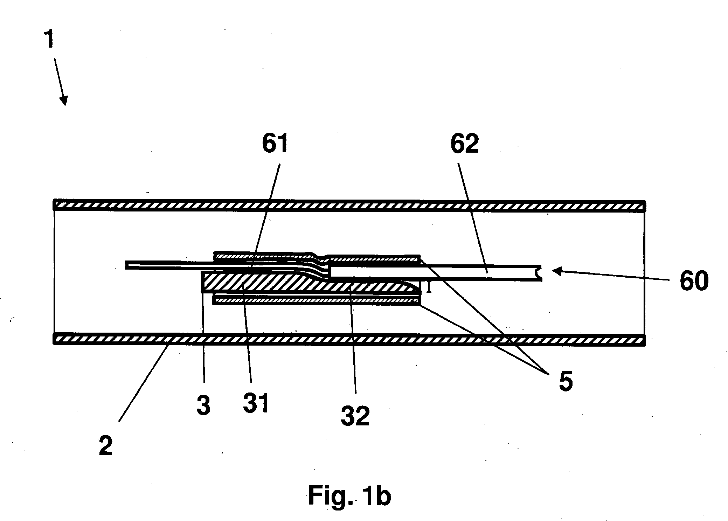

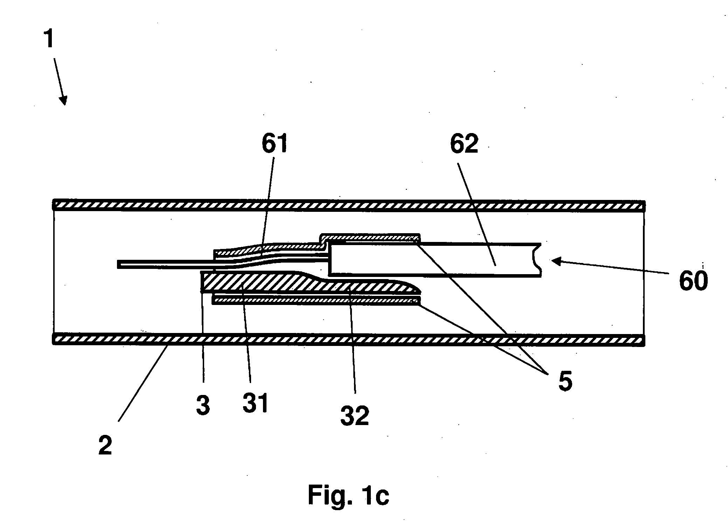

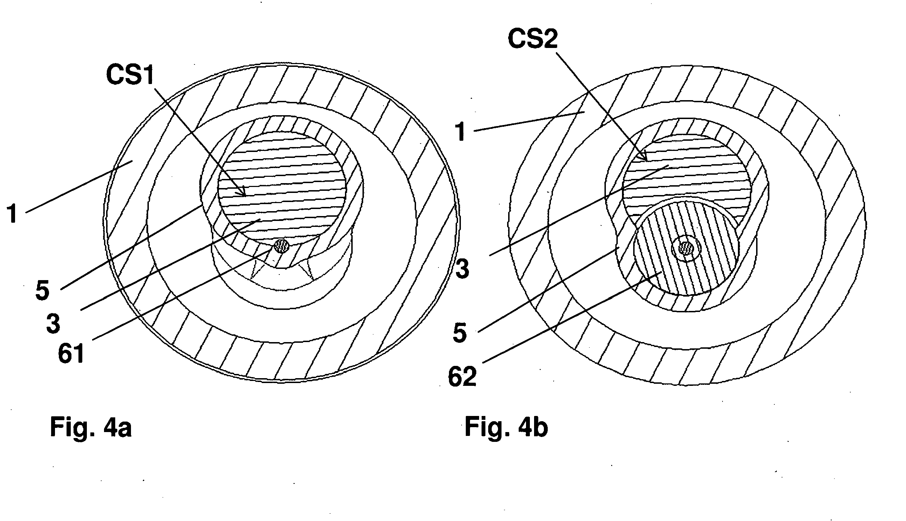

In the embodiment shown in Fig. 1 a and Fig. 4a, the fiber is attached to the fiber attachment element 3 by using a heat shrink tube 5, and the fiber attachment element has a first portion 31 for contact with a bare portion of an optical fiber and a second portion 32 for contact with a coated portion of an optical fiber. The fiber attachment element 3 can be pressed, snapped, welded, glued or co-injected with an intermediate element e.g. a shielding. In addition, the fiber attachment element 3 and the so called intermediate element can even be one single element. This intermediate element is preferably mounted into a connector body 1.

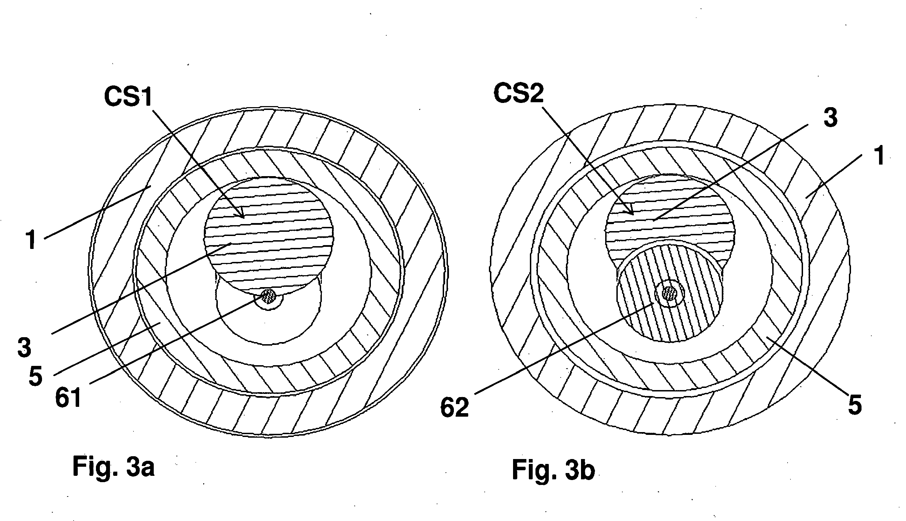

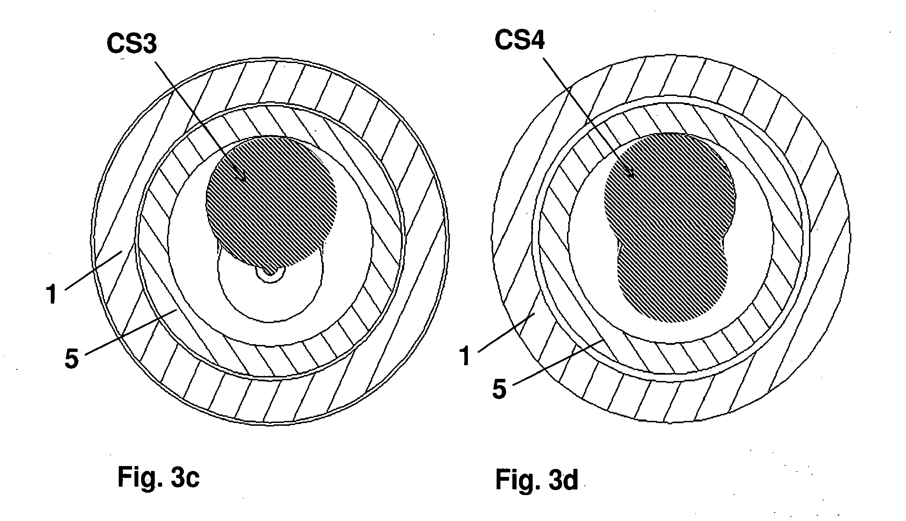

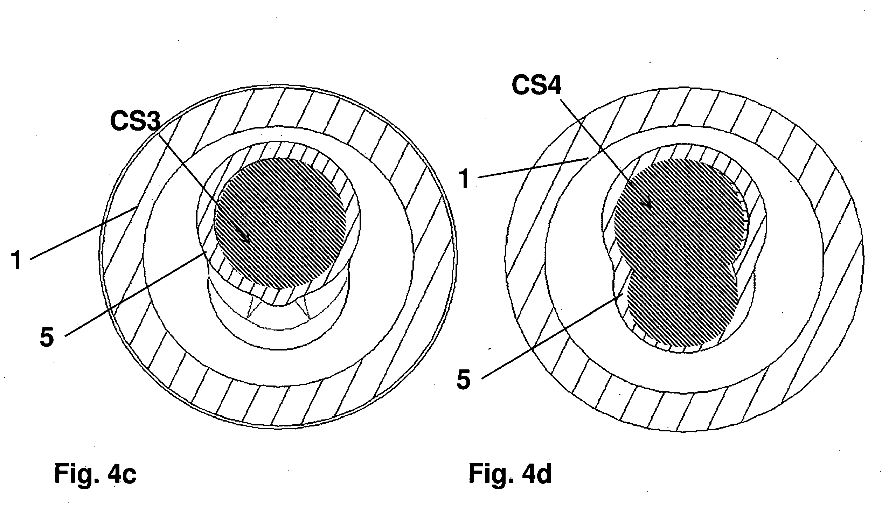

The first portion 31 has a first cross-sectional area CS1, as illustrated in Fig. 4a, which shows a cross-sectional view perpendicular to the longitudinal direction of the optical fiber. The second portion 32 has a second cross-sectional area CS2 as illustrated in Fig. 4b. In the shown embodiment, the first cross-sectional area (CS1) is larger than the second cross-sectional area (CS2). On the other hand in the first portion 31 the combined cross-sectional area (CS3) of the fiber attachment element together with the cross-sectional area of the bare optical fiber 61 (see fig. 4c) is smaller than the combined cross-sectional area (CS4) of the fiber attachment element in the second portion 32 and a coated portion of the optical fiber 62 see fig. 4d). The dimensional properties of the fiber attachment element for an unattached optical fiber remain similar as illustrated in Fig. 3a-3d.

Additionally, a hot melt material may be applied to the optical fiber and to the fiber attachment element, before the application of the thermoformable material such as heat-recoverable element. In one embodiment, the thermoformable material such as heat-recoverable element, e.g. a heat shrink tube, comprises a hot melt material within or on its inner surface so that the hot melt material melts when the heat shrink tube is heated, or "activated".

In the embodiment discussed with reference to Fig. 1a, after activation of the thermoformable material such as heat-recoverable element is completed, the bare portion 61 of the optical fiber is fixed with respect to the coating 62. Moreover, the bare portion 61 is fixed with respect to the fiber attachment element 3. The fiber attachment element itself is fixed with respect to the connector (in a way not shown but as known in the art). Preferably, heat shrink tube 5 has a hot melt material on its inner surface which improves the fiber fixation.

In this embodiment, fiber grow out is prevented, by the fixation of the bare portion 61 of the optical fiber with respect to the coating 62.

The use of fiber attachment element 3 improves fiber fixation appreciably, for fixation of the bare portion with respect to the coating, and for fixation of the bare portion with respect to the connector.

The end of the fiber attachment element at the side where the optical fiber is to be inserted may be rounded, to improve insertion.

We have found that fiber grow out cannot be prevented by using only a heat shrink tube and hot melt material.

Further, it has been found that a single kit of a heat shrink tube (preferably provided with hot melt) and a fiber attachment element is sufficient to provide fiber fixation for optical fibers that have a cladding diameter of 125 µm and a coating diameter, i.e. the diameter of the buffer or secondary coating, in the range of 250 to 1100 µm. The whole range of coatings for different types of optical fibers, from 250 µm to 1100 µm, can thus be covered by a single kit. No different kits have to be prepared for optical fibers with small coatings and optical fibers with large coatings. Fig. 1b schematically shows a cross section, along the direction of the longitudinal axis of an optical fiber, of a connector body according to an embodiment in accordance with the invention, whereby an optical fiber 60 having a coating diameter smaller than 900 µm, more specifically 250 µm, is attached to a fiber attachment element 3 that is surrounded by the connector body 2. As illustrated, the bare portion of the optical fiber is given a very slight bend after attaching the optical fiber to the fiber attachment element, however practical testing showed that the bend in the 250µm fiber does not cause any optical losses, and aging does not cause the fiber to break. Fig. 1c schematically shows a cross section, along the direction of the longitudinal axis of an optical fiber, of a connector body according to an embodiment in accordance with the invention, whereby an optical fiber 60 having a coating bigger than 900 µm, more specifically 1100 µm, is attached to a fiber attachment element 3 that is surrounded by the connector body 2. Again by applying a method according to embodiments of the present invention, bending of the bare portion of the optical fiber occurs, but tests showed that the bend in the 1100 µm does not cause any optical losses as well. An example of such a kit is as follows:
- a fiber attachment element preferably made from a metal, more specifically Aluminum 6061-T6 clear anodized, Aluminum 2024-T4 clear anodized or Xyloy M950 or it can be made from a thermoplastic material, for instance Polyphenylsulfone, more specifically Radel R5100 or Valox 420SEO. The fiber attachment element preferably has an outside diameter between 0,9 and 1,2 mm resulting in a cross-sectional area between 0,6 and 1,2 mm².
- a heat shrink tube preferably made from or comprising two materials, whereby one material is used for the outer surface of the heat shrink tube and preferably another material for its inner surface, an first example can be a 513-X (MT-LWA) compound on the outer surface together with a DWR 9763 (Lucalen A2920) compound as inner surface, a second example can be a 521-X (RNF100A) compound on the outer surface together with a 463-N (TAT-125 Adhesive) compound as inner surface, a third example can be a 521-X (RNF100A) compound on the outer surface together with a DWR 9763 (Lucalen A2920) compound as inner surface, a fourth example can be a polyethylene compound jacket type 513 on the outer surface together with a tackified ethylene-butyl acrylate adhesive as inner surface, for instance DWR9940, can also be used,
- the dimensions of a heat shrink tube are preferably a length between 10 and 15 mm, an outside diameter 2.6 mm, a wall thickness of 0.25 mm, and a 4/1 shrink ratio (i.e. the heat shrink tube would shrink to 2.6/4 mm = 0.525 mm if it could shrink freely).

Another advantage of some embodiments of the invention is that contamination is avoided or at least appreciably reduced. All parts, such as the fiber attachment element and the thermoformable material e.g. heat-recoverable element, may already be present in the connector body, e.g. by pre-assembly under factory conditions, so that in the field only the optical fiber has to be inserted in the connector.

Another advantage of some embodiments of the invention is that no tension, or only very little tension, is exerted on the fiber, as opposed to e.g. mechanical attachment methods that use e.g. a wedge; this absence of substantial tension level results in good optical properties of light transmission through the fiber, such as low insertion loss and low modal noise.

Further, the attachment method is easily automated; all that has to be done in the field is to activate, e.g. by heating, the heat-recoverable element.

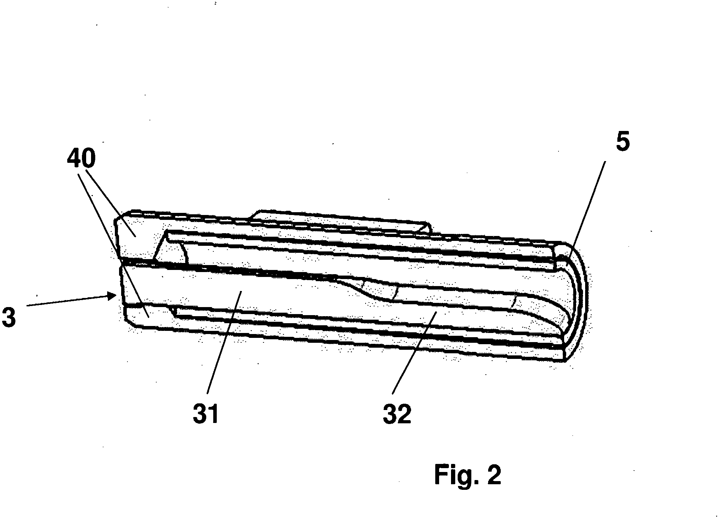

Fig. 2 shows a 3D view, cut in half, of an embodiment of a fiber attachment element 3. The first portion 31 and the second portion 32 of the fiber attachment element are shown. A heat shrink tube 5 surrounds the fiber attachment element 3. The connector body 2 comprises stopping elements 40, whereby the stopping elements 40 preferably abut the first portion 31 heat shrink tube 5. Advantageously when attaching the heat shrink tube to the optical fiber, the stopping elements prevent any shift of the heat shrink tube along the longitudinal direction of the optical fiber.

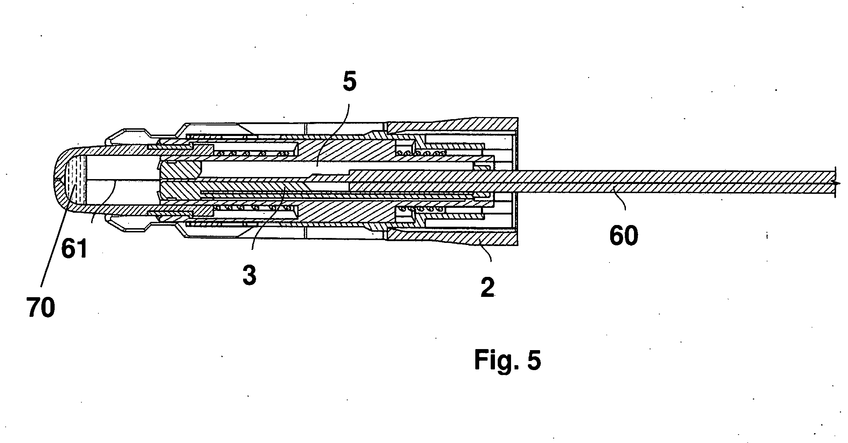

Fig. 5 shows an embodiment of an optical fiber connector 1 wherein an optical fiber 60 is attached. The connector body 2 and the fiber attachment element 3 are also shown. The connector is preferably a "ferrule-less" connector where an end portion of the optical fiber is not supported by a ferrule (i.e., the end portion of the optical fiber is unsupported). In certain embodiments, the unsupported end portion of the optical fiber is bare glass and includes only a glass core surrounded by glass cladding. In certain embodiments, the optical fiber is secured within a connector body (i.e., a connector housing) having an interface end. The connector can have a first configuration where the unsupported end portion is enclosed and protected within the connector body. The connector also can have a second configuration where an endface of the unsupported end portion can be accessed at the interface end of the connector body for optical connection to another optical fiber. In certain embodiments, the connector can include a protective cover that is movable relative to the connector body between a first position where the unsupported end portion of the optical fiber is enclosed within the connector body and protected from contamination, and a second position where the end face of the unsupported end portion of the optical fiber can be accessed for optical connection to another optical fiber. An adhesive can be used to adhesively affix/bond both the bare glass and a secondary coating of the optical fiber to an attachment structure within the connector body. In this way, the optical fiber is axially anchored at a desired position within the connector body and the bare glass of the optical fiber is axially anchored relative to the secondary coating. The adhesive can be a heat activated adhesive.

In some embodiments the minimum length of the unsupported end portion of the optical fiber if preferably between 10-15 mm..

It is to be understood that this invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

The invention is defined by the appended claims.

## Claims

1. Method for attaching an optical fiber (60) in an optical fiber connector (1), said optical fiber connector (1) comprising a fiber attachment element (3), a thermoformable material surrounding said fiber attachment element (3) and a connector body (2) surrounding said thermoformable material, the method comprising the steps of:
- inserting the optical fiber (60) into the optical fiber connector (1);
- inserting the bare portion of the optical fiber (61) between a first portion of said fiber attachment element (31) and the thermoformable material, wherein said first portion of said fiber attachment element (31) for contacting the bare portion of the optical fiber has a first cross-sectional area (CS1) ;
- inserting the coated portion of the optical fiber (62) between a second portion of said fiber attachment element (32) and the thermoformable material, wherein said second portion of said fiber attachment element (32) for contacting the coated portion of the optical fiber (62) has a second cross-sectional area (CS2) smaller than said first cross-sectional area (CS1),
- activating the thermoformable material, thus attaching the optical fiber (60) to the fiber attachment element (3);
- attaching a bare portion of the optical fiber (61) to the fiber attachment element (3) and attaching a coated portion of the optical fiber (62) to the fiber attachment element (3).

2. Method according to claim 1, wherein said thermoformable material is a heat shrink material or a heat shrink tube (5).

3. Method according to any one of claims 1 to 2, further comprising applying a hot melt material to the optical fiber and to the fiber attachment element (3).

4. Method according to claim 3 when dependent on claim 2 wherein said heat shrink tube (5) comprises said hot melt material on its inner surface.

5. Kit of parts for use in attaching an optical fiber (60) in an optical fiber connector (1), the kit comprising:
- a fiber attachment element (3) adapted for being attached to the optical fiber (60);
- a thermoformable material, adapted to surround said fiber attachment element (3), for attaching the optical fiber (60) to the fiber attachment element (3); and;
- a connector body (2) of said optical fiber connector (1), adapted to surround said thermoformable material and said fiber attachment element (3),
wherein the fiber attachment element (3) is adapted for use with an optical fiber (60) having a bare portion (61) and a coated portion (62), wherein the fiber attachment element (3) has a first portion (31) for contacting the bare portion and a second portion (32) for contacting the coated portion of the optical fiber, wherein said first portion (31) has a - first cross-sectional area (CS1) and said second portion (32) for contacting the coated portion of the optical fiber has a second cross-sectional area (CS2), and wherein said second cross-sectional area (CS2) is smaller than said first cross-sectional area (CS1).

6. Kit of parts according to claim 5, wherein said connector body (2) comprises a stopping element (40) adapted to abut the thermoformable material.

7. Kit of parts according to claim 5 or 6, wherein said thermoformable material is a heat shrink tube (5).

8. Kit of parts according to claim 7, wherein said heat shrink tube (5) has a hot melt material on its inner surface.

9. Optical fiber connector (1) comprising an optical fiber (60), and further comprising:
- a connector body (2);
- a fiber attachment element (3) positioned in said connector body (2); and
- a thermoformable material positioned around said fiber attachment element (3) and positioned for receiving the optical fiber (60) between the fiber attachment element (3) and the thermoformable material and for attaching the optical fiber (60) to the fiber attachment element (3);
wherein the optical fiber (60) has a bare portion (61) and a coated portion (62), wherein said fiber attachment element (3) has a first portion (31) for contacting the bare portion and a second portion (32) for contacting the coated portion, said first portion (31) having a first cross-sectional area (CS1) and said second portion (32) having a second cross-sectional area (CS2), and wherein said second cross-sectional area (CS2) is smaller than said first cross-sectional area (CS1).

10. Optical fiber connector according to claim 9 wherein said thermoformable material is a heat shrink tube (5), wherein said heat shrink tube (5) optionally has a hot melt material on its inner surface.

## Patentansprüche

1. Verfahren zum Befestigen einer Glasfaser (60) in einem Glasfaserstecker (1), wobei der Glasfaserstecker (1) ein Faserbefestigungselement (3), ein das Faserbefestigungselement (3) umschließendes thermoformbares Material und einen das thermoformbare Material umschließenden Steckerkörper (2) umfasst, wobei das Verfahren die Schritte umfasst:
- Einführen der Glasfaser (60) in den Glasfaserstecker (1);
- Einführen des blanken Abschnitts der Glasfaser (61) zwischen einen ersten Abschnitt des Faserbefestigungselements (31) und das thermoformbare Material, wobei der erste Abschnitt des Faserbefestigungselements (31) zum Kontaktieren des blanken Abschnitts der Glasfaser eine erste Querschnittsfläche (CS1) aufweist;
- Einführen des beschichteten Abschnitts der Glasfaser (62) zwischen einen zweiten Abschnitt des Faserbefestigungselements (32) und das thermoformbare Material, wobei der zweite Abschnitt des Faserbefestigungselements (32) zum Kontaktieren des beschichteten Abschnitts der Glasfaser (62) eine zweite Querschnittsfläche (CS2) aufweist, die kleiner ist als die erste Querschnittsfläche (CS1);
- Aktivieren des thermoformbaren Materials, wodurch die Glasfaser (60) an dem Faserbefestigungselement (3) befestigt wird;
- Befestigen eines blanken Abschnitts der Glasfaser (61) am Faserbefestigungselement (3) und Befestigen eines beschichteten Abschnitts der Glasfaser (62) am Faserbefestigungselement (3).

2. Verfahren nach Anspruch 1, wobei das thermoformbare Material ein Warmschrumpfmaterial oder ein Warmschrumpfschlauch (5) ist.

3. Verfahren nach einem der Ansprüche 1 bis 2, das ferner umfasst, ein Heißschmelzmaterial auf die Glasfaser und auf das Faserbefestigungselement (3) aufzubringen.

4. Verfahren nach Anspruch 3, insofern dieser auf Anspruch 2 rückbezogen ist, wobei der Warmschrumpfschlauch (5) das Heißschmelzmaterial auf seiner Innenoberfläche umfasst.

5. Montagesatz zur Verwendung beim Befestigen einer Glasfaser (60) in einem Glasfaserstecker (1), wobei der Montagesatz umfasst:
- ein Faserbefestigungselement (3), das geeignet ist, an der Glasfaser (60) befestigt zu werden;
- ein thermoformbares Material, das geeignet ist, das Faserbefestigungselement (3) zum Befestigen der Glasfaser (60) am Faserbefestigungselement (3) zu umschließen; und
- einen Steckerkörper (2) des Glasfasersteckers (1), der geeignet ist, das thermoformbare Material und das Faserbefestigungselement (3) zu umschließen,
wobei das Faserbefestigungselement (3) zur Verwendung mit einer Glasfaser (60) geeignet ist, die einen blanken Abschnitt (61) und einen beschichteten Abschnitt (62) aufweist, wobei das Faserbefestigungselement (3) einen ersten Abschnitt (31) zum Kontaktieren des blanken Abschnitts und einen zweiten Abschnitt (32) zum Kontaktieren des beschichteten Abschnitts der Glasfaser aufweist, wobei der erste Abschnitt (31) eine erste Querschnittsfläche (CS1) aufweist und der zweite Abschnitt (32) zum Kontaktieren des beschichteten Abschnitts der Glasfaser eine zweite Querschnittsfläche (CS2) aufweist, und wobei die zweite Querschnittsfläche (CS2) kleiner ist als die erste Querschnittsfläche (CS1).

6. Montagesatz nach Anspruch 5, wobei der Steckerkörper (2) ein Anschlagelement (40) umfasst, das geeignet ist, gegen das thermoformbare Material zur Anlage zu kommen.

7. Montagesatz nach Anspruch 5 oder 6, wobei das thermoformbare Material ein Warmschrumpfschlauch (5) ist.

8. Montagesatz nach Anspruch 7, wobei der Warmschrumpfschlauch (5) ein Heißschmelzmaterial auf seiner Innenoberfläche aufweist.

9. Glasfaserstecker (1), der eine Glasfaser (60) umfasst, und der ferner umfasst:
- einen Steckerkörper (2);
- ein Faserbefestigungselement (3), das in dem Steckerkörper (2) positioniert ist; und
- ein thermoformbares Material, das um das Faserbefestigungselement (3) herum positioniert ist und zur Aufnahme der Glasfaser (60) zwischen dem Faserbefestigungselement (3) und dem thermoformbaren Material und zum Befestigen der Glasfaser (60) am Faserbefestigungselement (3) positioniert ist;
wobei die Glasfaser (60) einen blanken Abschnitt (61) und einen beschichteten Abschnitt (62) aufweist, wobei das Faserbefestigungselement (3) einen ersten Abschnitt (31) zum Kontaktieren des blanken Abschnitts und einen zweiten Abschnitt (32) zum Kontaktieren des beschichteten Abschnitts aufweist, wobei der erste Abschnitt (31) eine erste Querschnittsfläche (CS1) aufweist und der zweite Abschnitt (32) eine zweite Querschnittsfläche (CS2) aufweist, und wobei die zweite Querschnittsfläche (CS2) kleiner ist als die erste Querschnittsfläche (CS1).

10. Glasfaserstecker nach Anspruch 9, wobei das thermoformbare Material ein Warmschrumpfschlauch (5) ist, wobei der Warmschrumpfschlauch (5) wahlweise ein Heißschmelzmaterial auf seiner Innenoberfläche aufweist.

## Revendications

1. Procédé pour attacher une fibre optique (60) dans un connecteur de fibre optique (1), ledit connecteur de fibre optique (1) comprenant un élément d'attache de fibre (3), un matériau thermoformable entourant ledit élément d'attache de fibre (3) et un corps de connecteur (2) entourant ledit matériau thermoformable, le procédé comprenant les étapes consistant à :
- insérer la fibre optique (60) dans le connecteur de fibre optique (1) ;
- insérer la partie nue de la fibre optique (61) entre une première partie dudit élément d'attache de fibre (31) et le matériau thermoformable, ladite première partie dudit élément d'attache de fibre (31) pour la mise en contact de la partie nue de la fibre optique ayant une première surface en coupe transversale (CS1);
- insérer la partie revêtue de la fibre optique (62) entre une deuxième partie dudit élément d'attache de fibre (32) et le matériau thermoformable, ladite deuxième partie dudit élément d'attache de fibre (32) pour la mise en contact de la partie revêtue de la fibre optique (62) ayant une deuxième surface en coupe transversale (CS2) inférieure à ladite première surface en coupe transversale (CS1),
- activer le matériau thermoformable, en attachant ainsi la fibre optique (60) à l'élément d'attache de fibre (3) ;
- attacher une partie nue de la fibre optique (61) à l'élément d'attache de fibre (3) et attacher une partie revêtue de la fibre optique (62) à l'élément d'attache de fibre (3).

2. Procédé selon la revendication 1, dans lequel ledit matériau thermoformable est un matériau thermorétractable ou un tube thermorétractable (5).

3. Procédé selon l'une quelconque des revendications 1 et 2, comprenant en outre l'application d'un matériau thermofusible à la fibre optique et à l'élément d'attache de fibre optique (3).

4. Procédé selon la revendication 3 lorsqu'il dépend de la revendication 2, dans lequel ledit tube thermorétractable (5) comprend ledit matériau thermofusible sur sa surface intérieure.

5. Kit de pièces pour utilisation dans l'attache d'une fibre optique (60) dans un connecteur de fibre optique (1), le kit comprenant :
- un élément d'attache de fibre (3) adapté pour être attaché à la fibre optique (60) ;
- un matériau thermoformable adapté pour entourer ledit élément d'attache de fibre (3), pour attacher la fibre optique (60) à l'élément d'attache de fibre (3) ; et
- un corps de connecteur (2) dudit connecteur de fibre optique (1) adapté pour entourer ledit matériau thermoformable et ledit élément d'attache de fibre (3), dans lequel l'élément d'attache de fibre (3) est adapté pour être utilisé avec une fibre optique (60) ayant une partie nue (61) et une partie revêtue (62), dans lequel l'élément d'attache de fibre (3) a une première partie (31) pour la mise en contact de la partie nue et une deuxième partie (32) pour la mise en contact de la partie revêtue de la fibre optique, dans lequel ladite première partie (31) a une première surface en coupe transversale (CS1) et ladite deuxième partie (32) pour la mise en contact de la partie revêtue de la fibre optique a une deuxième surface en coupe transversale (CS2), et dans lequel ladite deuxième surface en coupe transversale (CS2) est inférieure à ladite première surface en coupe transversale (CS1).

6. Kit de pièces selon la revendication 5, dans lequel ledit corps de connecteur (2) comprend un élément d'arrêt (40) adapté pour buter contre le matériau thermoformable.

7. Kit de pièces selon la revendication 5 ou 6, dans lequel ledit matériau thermoformable est un tube thermorétractable (5).

8. Kit de pièces selon la revendication 7, dans lequel ledit tube thermorétractable (5) a un matériau thermofusible sur sa surface intérieure.

9. Connecteur de fibre optique (1) comprenant une fibre optique (60) et comprenant en outre :
- un corps de connecteur (2) ;
- un élément d'attache de fibre (3) positionné dans ledit corps de connecteur (2) ; et
- un matériau thermoformable positionné autour dudit élément d'attache de fibre (3) et positionné de manière à recevoir la fibre optique (60) entre l'élément d'attache de fibre (3) et le matériau thermoformable et de manière à attacher la fibre optique (60) à l'élément d'attache de fibre (3) ;
dans lequel la fibre optique (60) a une partie nue (61) et une partie revêtue (62), dans lequel l'élément d'attache de fibre (3) a une première partie (31) pour la mise en contact de la partie nue et une deuxième partie (32) pour la mise en contact de la partie revêtue, ladite première partie (31) ayant une première surface en coupe transversale (CS1) et ladite deuxième partie (32) ayant une deuxième surface en coupe transversale (CS2), et dans lequel ladite deuxième surface en coupe transversale (CS2) est inférieure à ladite première surface en coupe transversale (CS1).

10. Connecteur de fibre optique selon la revendication 9, dans lequel ledit matériau thermoformable est un tube thermorétractable (5), et dans lequel ledit tube thermorétractable (5) a éventuellement un matériau thermofusible sur sa surface intérieure.
